(19) Europäisches Patentamt
European Patent Office
Office européen des brevets

(11) **EP 2 668 519 B1**

(12) **FASCICULE DE BREVET EUROPEEN**

(45) Date de publication et mention
de la délivrance du brevet:
**25.04.2018 Bulletin 2018/17**

(21) Numéro de dépôt: **12700869.6**

(22) Date de dépôt: **26.01.2012**

(51) Int Cl.:
**G01S 7/41** (2006.01)

(86) Numéro de dépôt international:
**PCT/EP2012/051226**

(87) Numéro de publication internationale:
**WO 2012/101211 (02.08.2012 Gazette 2012/31)**

(54) **PROCEDE D'AFFICHAGE DE LA SURFACE EQUIVALENTE RADAR MINIMALE DETECTABLE**

VERFAHREN ZUR ANZEIGE DES MINIMALEN NACHWEISBAREN RADARQUERSCHNITTS

METHOD FOR DISPLAYING THE MINIMUM DETECTABLE RADAR CROSS-SECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.01.2011 FR 1100245**

(43) Date de publication de la demande:
**04.12.2013 Bulletin 2013/49**

(73) Titulaire: **THALES**
**92400 Courbevoie (FR)**

(72) Inventeurs:
- **BON, Nicolas**
  **F-29200 Brest (FR)**
- **QUELLEC, Jean-Michel**
  **F-29810 Ploumoguer (FR)**
- **KEMKEMIAN, Stéphane**
  **F-75014 Paris (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A1- 0 588 688     FR-A1- 2 729 474**
**US-A- 4 970 660**

- **GUO-HONG WANG ET AL: "Target detection in Rayleigh-distributed sea clutter environment based on Hough transform", MACHINE LEARNING AND CYBERNETICS, 2005. PROCEEDINGS OF 2005 INTERNATIO NAL CONFERENCE ON GUANGZHOU, CHINA 18-21 AUG. 2005, PISCATAWAY, NJ, USA,IEEE, PISCATAWAY, NJ, USA, 18 août 2005 (2005-08-18), pages 1568-1573VOL.3, XP031438235, ISBN: 978-0-7803-9091-1**
- **WATTS S ET AL: "MARITIME SURVEILLANCE RADAR. PART 2: DETECTION PERFORMANCE PREDICTION IN SEA CLUTTER", IEE PROCEEDINGS F.COMMUNICATIONS, RADAR & SIGNALPROCESSING, INSTITUTION OF ELECTRICAL ENGINEERS. STEVENAGE, GB, vol. 137, no. 2, PART F, 1 avril 1990 (1990-04-01), pages 63-72, XP000102814, ISSN: 0956-375X**
- **CONTE E ET AL: "Clutter-map CFAR detection for range-spread targets in non-Gaussian clutter. I. System design", IEEE TRANSACTIONS ON AEROSPACE AND ELECTRONIC SYSTEMS, IEEE SERVICE CENTER, PISCATAWAY, NJ, US, vol. 33, no. 2, 1 avril 1997 (1997-04-01), pages 432-443, XP011201119, ISSN: 0018-9251**
- **ARMSTRONG B C ET AL: "CFAR DETECTION OF FLUCTUATING TARGETS IN SPATIALLY CORRELATED K-DISTRIBUTED CLUTTER", IEE PROCEEDINGS F.COMMUNICATIONS, RADAR & SIGNALPROCESSING, INSTITUTION OF ELECTRICAL ENGINEERS. STEVENAGE, GB, vol. 138, no. 2 PART F, 1 avril 1991 (1991-04-01), pages 139-152, XP000230288, ISSN: 0956-375X**

## Description

La présente invention se rapporte à un procédé d'affichage de la SER (surface équivalente radar) minimale des cibles que le radar peut détecter, et en particulier d'affichage sur une carte distance/azimut (dite « PPI »). L'invention concerne le domaine général des radars, et en particulier celui des radars de surveillance maritime aéroportés ou sur navire.

On connaît d'après le brevet français 2 729 474 de S.Watts, intitulé « procédé et dispositif pour estimer la distance de détection d'un radar », un procédé traitant de la SER, applicable notamment aux radars aéroportés servant à exécuter une exploration par balayage de la surface de la mer. Cependant, ce document propose uniquement de calculer la distance maximale de détection d'une cible de SER prédéterminée. Des lignes de niveaux sont alors ajoutées sur le dispositif de visualisation du radar. L'inconvénient de ce procédé connu est que les seuils de détection correspondent à un modèle « clutter seul = C » (« clutter » signifiant fouillis, bruit de la mer dans le cas présent) et non « clutter + bruit thermique = C+B » (le rapport S/Cmin estimé est en fait S/(C+B)). Quand le bruit thermique devient non négligeable, ce procédé devient donc moins robuste. Ce procédé suppose de plus que le clutter de mer suit une loi prédéterminée et ne tient donc pas compte directement des mesures radar. De plus, ce procédé ne tient pas compte des fluctuations de réflectivité de la cible.

La demande de brevet européen intitulée « Procédé et dispositif de réglage du seuil de détection d'un radar » publiée sous la référence EP0588688 A1, décrit un procédé de réglage du seuil de détection d'un radar pour une probabilité de détection et une probabilité de fausse alarme données, basé sur une anlyse statistique des données radar reçues pour déterminer un modèle d'histogramme du clutter et déterminer le seuil de détection à partir d'une fonction liant la probabilité de fausse alamrme souhaitée au modèle d'histogramme du clutter élaboré. Ce document ne fournit toutefois aucune indication quant la façon de déterminer la surfaces équivalente minimales des cibles qu'un radar peut détecter à partir du seuil de détection ainsi déterminé.

Par ailleurs, le fascicule de brevet US intitulée « Accumulated statistics constant false alarm rate method and device » et publié sous la référence US 4,970,660, décrit un procédé de maintien d'un taux de fausse alarme constant (CFAR) mettant en oeuvre une utilisation d'une donnée statistique formée à partir des données radar, classées réparties en cellules distance et caractérisées par leur appartenance à tel ou tel bande de fréquence, pour déterminer la valeur de seuil de détection à laquelle les données radar considérées doivent être comparées pour déterminer si une détection doit être signalée ; différentes valeurs de seuils de détections étant stockés en mémoire. Ce document ne fournit pas non plus d'indication quant la façon de déterminer la surfaces équivalente minimales des cibles radar détectées.

La présente invention a pour objet un procédé d'affichage de la SER minimale des cibles qu'un radar peut détecter, en fonction de la distance et de l'azimut de l'antenne et ceci, en prenant en compte le signal observé en temps réel pendant la mission de détection.

Le procédé conforme à l'invention est caractérisé en ce qu'il consiste à analyser statistiquement les données reçues par le radar, sans faire d'hypothèse *a priori* sur leur distribution, pour déterminer le seuil de détection dont la valeur est convertie en valeur de SER minimale.

Selon un mode de mise en oeuvre du procédé de l'invention, ce procédé consiste à mesurer la loi de probabilité suivie par les données radar reçues, à mesurer le seuil de détection sur la fonction de répartition complémentaire pour une valeur de la probabilité de fausse alarme donnée, le seuil étant ensuite converti en valeur de SER, et adapté éventuellement pour tenir compte des fluctuations de la cible, les valeurs obtenues étant ensuite transmises à un dispositif d'affichage du type à affichage en fonction de la distance, de l'azimut, de l'élévation, et éventuellement du Doppler.

Le procédé de l'invention permet ainsi de :

- fournir une SER minimale détectable en fonction de la distance et de l'azimut pour des probabilités de détection et de fausse alarme données,
- ne pas faire d'hypothèse *a priori* sur la loi suivie par le clutter : la distribution du clutter est directement mesurée sur les données,
- prendre en compte la loi de fluctuation de la cible et de la paramétrer (par exemple à l'aide de modèles de Swerling, Nakagami, ...). Elle est connue *a priori.*

La loi de fluctuation des perturbations (clutter, bruit thermique, pluie, ...) est directement obtenue à partir des données mesurées par le radar en temps réel durant la mission.

L'intérêt majeur de la présente invention vient du fait que, par rapport aux prédictions basées sur des modèles reconnus, la SER minimale détectable peut varier de plusieurs dB (des variations pouvant aller jusqu'à 10 dB ont été observées). Ceci est causé par les variations des paramètres environnementaux et matériels par rapport aux modèles. On peut citer, par exemple, la présence de courants ou de rafales de vent qui augmentent localement la réflectivité de la mer, la présence de pluie, la modification des conditions de propagations (présence de conduits ou *« duct »* en langue anglaise, ou encore d'autres phénomènes), la variation du niveau du bruit thermique ou de phénomènes d'interférences liés au matériel (pureté spectrale de l'émetteur) ou aux traitements (par exemple, le niveau des lobes secondaires est variable suivant la pondération choisie).

L'invention permet de tenir compte simultanément de tous ces facteurs en prédisant la SER minimale détectable à partir des données mesurées par le radar.

La présente invention sera mieux comprise à la lecture de la description détaillée d'un mode de réalisation, pris à titre d'exemple non limitatif et illustré par le dessin annexé, sur lequel :

- la figure 1 est une représentation géographique utilisée par un radar, illustrant le procédé de découpage en zones élémentaires de cette représentation, procédé tel qu'utilisé par l'invention,
- la figure 2 est un diagramme de courbe de fausses alarmes obtenue d'après des mesures radar réelles, selon le procédé de la présente invention, et
- les figures 3 à 5 sont des diagrammes d'évolution de la SER pour différentes probabilités de fausse alarme et différentes probabilités de détection, selon trois modes de mise en oeuvre du procédé de l'invention.

La présente invention est décrite ci-dessous en référence à un radar de surveillance maritime aéroporté ou embarqué sur un navire, mais il est bien entendu qu'elle n'est pas limitée à cette application, et qu'elle peut être mise en oeuvre pour d'autres types de radars.

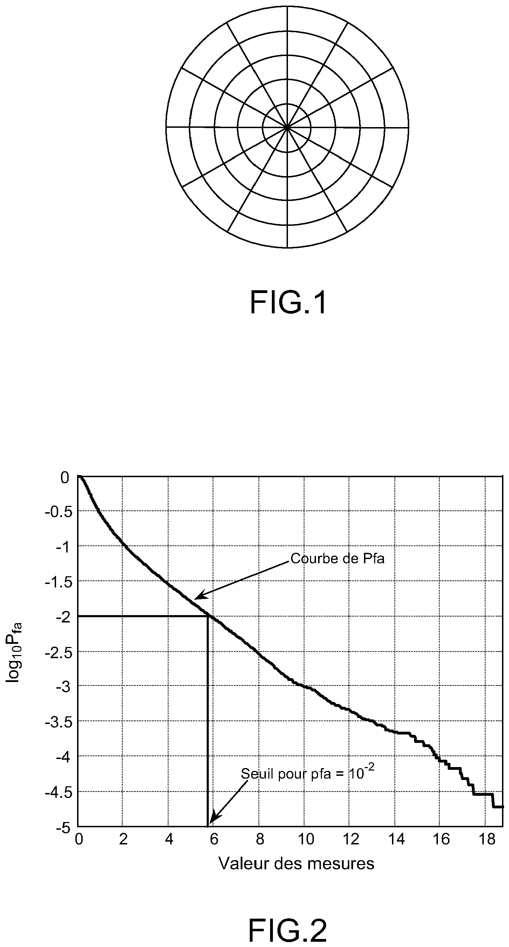

Les données radar sont par nature inhomogènes. Leur puissance et leur statistique peuvent varier dans le temps et dans l'espace suivant la nature du fouillis. Les traitements radar de détection basés sur la détermination d'un seuil à partir des statistiques utilisent alors généralement des données sur des zones supposées homogènes. Typiquement, les données sont regroupées par zones élémentaires qui découpent l'espace distance-azimut, comme représenté en figure 1. L'exemple de la figure 1 se rapporte à un découpage de la représentation géographique en zones ayant la forme de secteurs de cercle concentriques, mais il est bien entendu que ces zones peuvent avoir d'autres formes. Notons que dans le cadre d'un radar à mode Doppler, le procédé peut être étendu à la dimension Doppler : l'espace est alors « 4-D », c'est-à-dire qu'il prend en compte les quatre paramètres distance-azimut-élévation-Doppler.

Comme expliqué par la suite, la taille de chaque zone élémentaire doit contenir un nombre suffisant d'échantillons pour que la courbe de probabilité de fausse alarme puisse être formée avec précision. Les zones élémentaires ne doivent pas être trop grandes non plus, pour que les données qu'elles contiennent restent le plus homogènes possible.

Les mesures de chaque zone élémentaire sont normalisées en amplitude ou en puissance suivant le type de détecteur (linéaire ou quadratique). En pratique, cela correspond simplement à diviser l'ensemble des données d'une zone élémentaire par leur moyenne mathématique. Cette normalisation permettra par la suite d'obtenir des seuils de détection comparables entre zones élémentaires.

La probabilité de détection se définit comme la probabilité que le signal reçu avec le bruit dépasse un certain seuil de détection. On peut, par exemple, adapter ce seuil en fonction de l'environnement pour garantir un taux de fausses alarmes constant.

Le seuil de détection est mesuré à partir de la courbe de probabilité de fausse alarme (1 moins la fonction de répartition des mesures, c'est la *complementary cumulative density function* ou *ccdf*). Cette dernière est formée en effectuant une somme cumulée de l'histogramme des mesures et est normalisée par le nombre d'échantillons dans les mesures (telle qu'en zéro elle vaut 1). Ce principe est illustré sur la figure 2 où la courbe de probabilité de fausse alarme (Pfa) est formée à partir de mesures radar réelles.

Le nombre d'échantillons utilisé fixe la Pfa minimale pour laquelle le seuil pourra être évalué. Par exemple si l'on dispose de 100000 échantillons, la courbe de fausse alarme prendra ses valeurs entre $10^{-5}$ et 1. Cependant, la précision de celle-ci ne sera bonne que pour des Pfa supérieures à $10^{-4}$ voire $10^{-3}$. Cet aspect peut être observé sur la figure 2 où la courbe a un comportement en « marches d'escalier » pour des Pfa faibles. Le nombre d'échantillons devra donc être suffisant en fonction de la Pfa que l'on recherche. Si on cherche un seuil correspondant à une Pfa donnée, on adopte généralement la règle selon laquelle il faut au moins 10/Pfa, voire 100/Pfa échantillons pour faire l'estimation. Si l'application ne permet pas de disposer d'autant de mesures, on recourt à des méthodes d'extrapolation de la queue de distribution, mais cela sort du cadre de l'invention. Pour bénéficier de davantage de mesures, on peut également regrouper les mesures entre elles en définissant par exemple des zones élémentaires un peu plus grandes en distance ou en azimut.

Le seuil $\eta$ (ou $\eta^2$ suivant que les échantillons sont en amplitude ou en puissance) ainsi obtenu n'a pas d'unité puisqu'il est obtenu à partir de données normalisées. Afin de le passer en SER, il convient de prendre quelques précautions suivant le type de données manipulées. Pour un détecteur quadratique (données homogènes à une puissance et normalisées par une puissance moyenne), le seuil $\eta^2$ mesuré est alors converti en SER comme suit :

$$\eta^2_{SER} = \eta^2 \overline{\sigma}$$

où $\overline{\sigma}$ est la SER moyenne de la zone élémentaire (moyenne d'échantillons homogènes à une puissance).

Pour un détecteur linéaire (données en amplitudes normalisées par la moyenne des amplitudes), on ne peut pas directement multiplier $\eta^2$ par la SER moyenne de la zone élémentaire. En effet, il faut s'assurer que la puissance moyenne des échantillons normalisés de la zone élémentaire est égale à 1. Un facteur $\rho$ de compensation est alors appliqué, il est égal au rapport du carré de la moyenne des échantillons à la moyenne des carrés des échantillons :

$$\rho = \frac{\overline{X}^2}{\overline{X^2}}$$

où X est l'ensemble des échantillons de la zone élémentaire (avant normalisation). Pour un détecteur linéaire, le seuil en SER s'exprime alors comme suit :

$$\eta_{SER}^2 = \rho \eta^2 \overline{\sigma}$$

Le calibrage du radar est important. Son rôle est de pouvoir associer une valeur de SER à la mesure de puissance reçue.

Le calibrage peut être fait de plusieurs manières :

- à partir de mesures de puissances radar de cibles dont la SER est connue, par exemple des bouées équipées de réflecteurs radar calibrés.
- une autre possibilité est de connaître les gains de tous les éléments de la chaîne de réception et de retrouver la SER en utilisant l'équation radar. En pratique, cette méthode reste cependant moins précise qu'une calibration à partie d'un signal de SER connu car les gains des composants de la chaîne peuvent s'écarter de leur valeur théorique suivant plusieurs facteurs (température, pression, vieillissement des composants,...).
- une variante de cette méthode est de mesurer le niveau du bruit thermique à partir des données et de le comparer à sa valeur théorique kTBF dont les paramètres sont connus (k : constante de Boltzman, T : température, B : la bande du récepteur et F le facteur de bruit de la chaîne de réception). Cela permet d'estimer le gain de la chaîne de réception de manière plus précise.

A ce stade, on a mesuré le seuil, exprimé en SER, correspondant à la probabilité de fausse alarme recherchée. Cette quantité donne une première estimation de la SER minimale détectable par le radar. Cependant, elle ne tient pas compte des fluctuations de la cible ni de la probabilité de détection avec laquelle on souhaite détecter la cible. Ces paramètres peuvent modifier les résultats de façon importante.

Trois méthodes sont envisagées suivant le rapport coût algorithmique/précision des résultats que l'on souhaite atteindre :

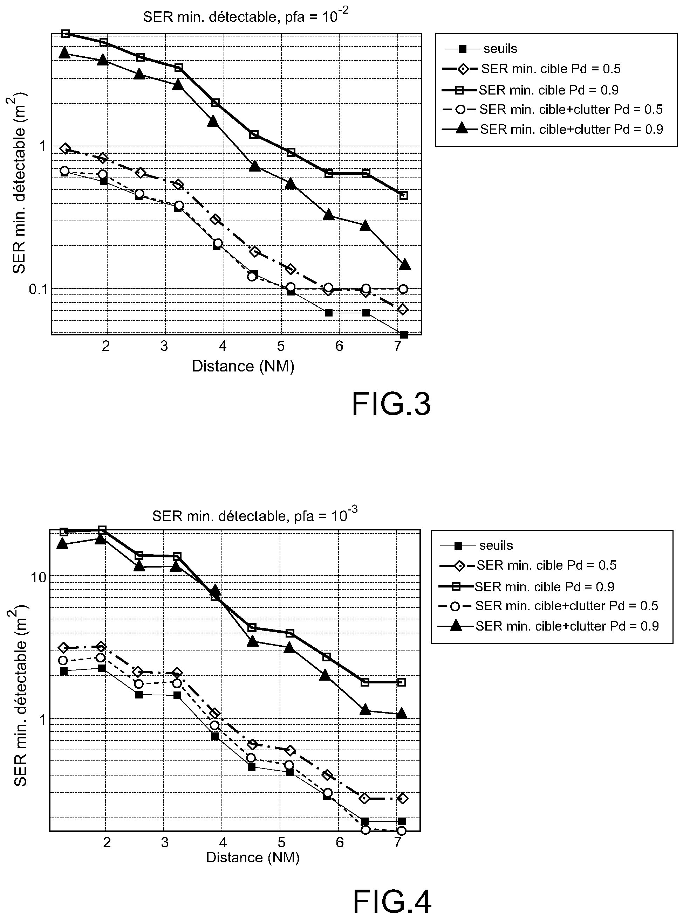

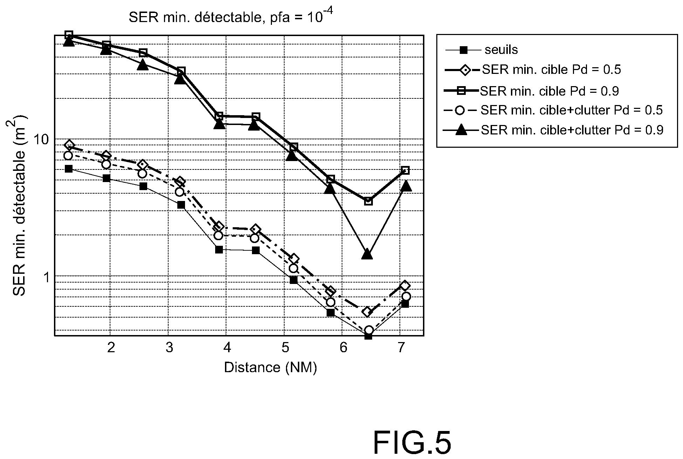

**Méthode 1**. Estimation de la SER minimale détectable uniquement à partir de la courbe de fausse alarme mesurée, sans tenir compte des fluctuations de réflectivité de la cible. Dans ce cas, le résultat correspond à une cible non fluctuante et est généralement sous-estimé par rapport à la réalité. C'est cependant la méthode la plus rapide. Une marge éventuelle peut être prise pour rendre compte de l'effet des fluctuations. On peut voir l'ordre de grandeur de cette marge sur les figures 3, 4 et 5, et cette marge correspond à l'écart entre la courbe des seuils et la courbe de SER minimale considérée. On observe que l'écart peut aller jusqu'à 10 dB. Cette valeur de l'écart dépend de la Pfa, de la distribution du paramètre « clutter + bruit thermique » et celle de la cible. Cette valeur est mentionnée ici à titre d'exemple, mais elle peut être différente.

**Méthode 2**. Estimation de la SER minimale détectable à partir de la courbe de fausse alarme : le seuil de détection est déterminé pour une Pfa souhaitée. La loi de fluctuation de la cible (connue *a priori*) est alors directement inversée pour obtenir la SER minimale correspondant à une probabilité de détection donnée. Cette méthode offre des résultats proches de la théorie (la différence vient du fait qu'elle ne tient pas compte de l'apport du clutter et du bruit à la détection) sans pour autant ajouter une charge de calculs importante.

**Méthode 3**. Estimation de la SER minimale à partir de la distribution du paramètre « clutter + cible ». La courbe de Pfa mesurée doit alors être convoluée avec la loi de probabilité de la cible, elle-même paramétrée par sa SER. Une technique d'optimisation numérique est alors mise en oeuvre pour obtenir la SER correspondant à la probabilité de détection souhaitée. Cette dernière méthode donne les résultats les plus fiables mais est cependant assez lourde en calculs.

La première méthode décrite ci-dessus peut être mise en oeuvre sans difficulté. Pour mettre en oeuvre les deux autres méthodes, la loi de fluctuation de réflectivité de la cible doit être supposée connue.

Dans les applications radar classiques, les lois de Swerling sont généralement utilisées. Dans la suite de la description, la loi de Swerling 1 sera prise en exemple. Cette loi modélise convenablement des cibles constituées de plusieurs points brillants et dont le signal reçu se décorrèle lentement. En amplitude, ce modèle correspond à une loi de Rayleigh. En supposant que les échantillons de X sont observés après le calibrage et en notant $\sigma = 2a^2$ la SER moyenne de la cible, la densité de probabilité d'une variable aléatoire X distribuée selon cette loi est donnée par :

$$p_X(x,a) = \frac{x}{a^2} \exp\left(-\frac{x^2}{2a^2}\right)$$

L'espérance de X est donnée par :

$$E\{X\} = a\sqrt{\frac{\pi}{2}}$$

La fonction de répartition de X est donnée par :

$$F_X(\eta,\sigma) = \mathrm{P}(X \leq \eta) = 1 - \exp\left(-\frac{\eta^2}{\sigma}\right)$$

et la probabilité de détection associée (ccdf) est alors :

$$P_d(\eta) = \mathrm{P}(X > \eta) = 1 - F_X(\eta,\sigma) = \exp\left(-\frac{\eta^2}{\sigma}\right)$$

D'après l'expression précédente, on déduit comment mettre en oeuvre la méthode 2. La SER moyenne minimale détectable est obtenue en inversant l'expression pour une probabilité de détection $P_{d,0}$ donnée et un seuil $\eta_{SER}^2$ obtenu par la méthode 1 pour une probabilité de fausse alarme souhaitée. La SER minimale détectable s'exprime alors comme suit :

$$\sigma_{\min} = -\frac{\eta_{SER}^2}{\ln(P_{d,0})}$$

La méthode 3 consiste à estimer la SER minimale détectable d'une cible de SER $\sigma$ sur du bruit (bruit thermique + clutter + autres perturbations éventuelles). En notant Y la variable aléatoire correspondant à ce bruit (ensemble des mesures de la zone élémentaire), la probabilité de détection s'écrit alors :

$$P_d(\eta,\sigma) = \mathrm{P}(X + Y > \eta) = \mathrm{P}(Y > \eta - X) = \int_0^{+\infty}\int_{\eta-x}^{+\infty} p_X(x,\sigma)p_Y(y)dydx = \int_0^{+\infty}(1 - F_Y(\eta - x))p_X(x,\sigma)dx$$

On remarque donc que la probabilité de détection de la méthode 3 peut être obtenue par une convolution de la probabilité de fausse alarme des mesures avec la densité de probabilité de la cible.

De plus, la probabilité de détection ainsi calculée dépend du seuil de détection mesuré sur les données de la zone élémentaire et de la SER de la cible. Afin de déterminer la SER minimale détectable pour une probabilité de détection $P_{d,0}$ désirée, il faut résoudre l'équation suivante :

$$\sigma_{\min} = \arg\min_{\sigma} \left| P_d(\eta, \sigma) - P_{d,0} \right|$$

Ceci peut être fait par différentes méthodes d'optimisation numérique (dichotomie, simplex, ...).

Les figures 3 à 5 représentent la SER minimum détectable suivant les trois méthodes citées ci-dessus, pour différentes probabilités de fausse alarme ($10^{-2}$, $10^{-3}$ et $10^{-4}$) et différentes probabilités de détection Pd (0,5 et 0,9). Les résultats présentés ont été obtenus en appliquant les traitements décrits ci-dessus sur des données réelles enregistrées en vol en présence de fouillis de mer.

Les SER minimales sont données en fonction de la distance, pour un pointage antenne donné. Dans cet exemple, chaque zone élémentaire fait environ 2.000 m de long et environ 15° d'ouverture.

On peut bien sûr remplir des cartes distance/azimut en appliquant cette méthode à toutes les zones élémentaires du domaine distance/azimut.

On peut également appliquer ce principe sur :

- Une troisième dimension : l'élévation (si le faisceau de l'antenne effectue des balayages en élévation)
- Une quatrième dimension : l'axe Doppler.

## Revendications

1. Procédé d'affichage de la surface équivalente radar, SER, minimale des cibles qu'un radar peut détecter pour une probabilité de détection $P_{d,0}$ et une probabilité de fausse alarme Pfa données, **caractérisé en ce que** ledit procédé consiste à analyser statistiquement les données reçues par le radar, à mesurer la loi de probabilité suivie par les données radar reçues et à mesurer un seuil de détection $\eta$ sur la fonction de répartition complémentaire pour une valeur de la probabilité de fausse alarme donnée, Pfa, le seuil étant ensuite converti en valeur de SER, ladite valeur de SER étant la valeur minimisant l'expression $|P_d(\eta,\sigma) - P_{d,0}|$ fonction de $P_{d,0}$, dans laquelle $P_d(\eta, \sigma)$ est la valeur de la probabilité de détection en fonction dudit seuil $\eta$ et d'une SER moyenne $\sigma$ de la cible calculée pour une zone de l'espace distance-azimut considéré, la valeur $P_d(\eta, \sigma)$ étant obtenue par une convolution de la probabilité de fausse alarme Pfa souhaitée avec la densité de probabilité $p_X(x, \sigma)$ correspondant à partir de la loi de probabilité suivi par les données radar, les valeurs obtenues étant ensuite transmises à un dispositif d'affichage du type à affichage en fonction de la distance, de l'azimut, de l'élévation.

2. Procédé selon la revendication 1, **caractérisé en ce que** le dispositif d'affichage du type à affichage fonction du Doppler en plus d'être en fonction de la distance, de l'azimut, et de l'élévation.

3. Procédé selon l'une quelconque des revendications précédentes, **caractérisé en ce que** le seuil est adapté pour tenir compte des fluctuations des perturbations, la loi de fluctuation des perturbations étant directement obtenue à partir des données mesurées par le radar en temps réel durant les mesures.

4. Procédé selon l'une des revendications précédentes, **caractérisé en ce que** les données radar recueillies sont regroupées par zones élémentaires qui découpent l'espace distance-azimut.

5. Procédé selon l'une des revendications 3 ou 4, **caractérisé en ce que** les données radar recueillies sont regroupées par zones élémentaires qui découpent distance-azimut-élévation-Doppler.

6. Procédé selon l'une des revendications précédentes, **caractérisé en ce que** l'estimation de la SER minimale détectable est faite uniquement à partir de la courbe de fausse alarme mesurée, sans tenir compte des fluctuations de réflectivité de la cible.

7. Procédé selon l'une quelconque des revendications précédentes, **caractérisé en ce que** l'estimation de la SER minimale détectable est faite à partir de la courbe de fausse alarme, le seuil de détection étant déterminé pour une Pfa souhaitée, et.la loi de fluctuation de la cible, connue *a priori,* étant alors directement inversée pour obtenir la SER minimale correspondant à une probabilité de détection donnée.

8. Procédé selon l'une quelconque des revendications 1 à 6, **caractérisé en ce que** l'estimation de la SER minimale détectable est faite à partir de la distribution du paramètre « clutter + cible », la courbe de Pfa mesurée étant alors être convoluée avec la loi de probabilité de la cible, elle-même paramétrée par sa SER, et que l'on met en oeuvre une technique d'optimisation numérique pour obtenir la SER correspondant à la probabilité de détection souhaitée.

**Patentansprüche**

1. Verfahren zur Anzeige des minimalen Radarquerschnitts SER von Zielen, die für ein Radar mit einer Detektionswahrscheinlichkeit $P_{d,0}$ und einer Wahrscheinlichkeit von Fehlalarmdaten Pfa erkennbar sind, **dadurch gekennzeichnet, dass** das Verfahren darin besteht, die durch das Radar erhaltenen Daten statistisch zu analysieren, das Wahrscheinlichkeitsgesetz, gefolgt durch die erhaltenen Radardaten, quantitativ zu bestimmen und einen Detekti-onsschwellenwert $\eta$ auf der komplementären Verteilungsfunktion für einen Wahrscheinlichkeitswert eines Fehlalarmdatenelements Pfa zu bestimmen, wobei der Schwellenwert in der Folge in einen SER-Wert umgewandelt wird, wobei der SER-Wert der Wert ist, der den Ausdruck $|P_d(\eta,\sigma) - P_{d,0}|$ abhängig von $P_{d,0}$ minimiert, in dem $P_d(\eta,\sigma)$ der Detektionswahrscheinlichkeitswert abhängig von dem Schwellenwert $\eta$ und einem mittleren SER $\sigma$ des berech-neten Ziels für einen Bereich des betrachteten Raums Abstand-Azimut ist, wobei der Wert $P_d(\eta,\sigma)$ durch eine Faltung der Wahrscheinlichkeit von gewünschtem Fehlalarm Pfa mit der Wahrscheinlichkeitsdichte $p_x(x, \sigma)$ entsprechend dem Wahrscheinlichkeitsgesetz gefolgt durch die Radardaten erhalten wird, wobei die erhaltenen Werte in der Folge an eine Anzeigevorrichtung der von Abstand, Azimut, Höhe abhängigen Anzeigeart weitergeleitet werden.

2. Verfahren nach Anspruch 1, **dadurch gekennzeichnet, dass** die Anzeigevorrichtung der von Doppler abhängigen Anzeigeart zusätzlich von dem Abstand, dem Azimut und der Höhe abhängig ist.

3. Verfahren nach einem der vorhergehenden Ansprüche, **dadurch gekennzeichnet, dass** der Schwellenwert angepasst wird, den Schwankungen der Störungen Rechnung zu tragen, wobei das Gesetz der Schwankung der Störungen anhand der Daten direkt erhalten wird, die durch das Radar in Echtzeit während der Messungen gemessen werden.

4. Verfahren nach einem der vorhergehenden Ansprüche, **dadurch gekennzeichnet, dass** die gesammelten Radardaten nach elementaren Bereichen zusammengefasst werden, die den Raum Abstand-Azimut ausschneiden.

5. Verfahren nach einem der Ansprüche 3 oder 4, **dadurch gekennzeichnet, dass** die gesammelten Radardaten nach elementaren Bereichen zusammengefasst werden, die Abstand-Azimut-Höhe-Doppler ausschneiden.

6. Verfahren nach einem der vorhergehenden Ansprüche, **dadurch gekennzeichnet, dass** die Abschätzung des nachweisbaren minimalen SER ausschließlich aus der gemessenen Fehlalarmkurve erfolgt, ohne den Schwankungen der Zielreflexion Rechnung zu tragen.

7. Verfahren nach einem der vorhergehenden Ansprüche, **dadurch gekennzeichnet, dass** die Abschätzung des nachweisbaren minimalen SER anhand der Fehlalarmkurve erfolgt, wobei der Detektionsschwellenwert für eine gewünschte Pfa bestimmt wird und das *von vornherein* bekannte Gesetz der Zielschwankung dann direkt umgekehrt wird, um den einer gegebenen Detektionswahrscheinlichkeit entsprechenden minimalen SER zu erhalten.

8. Verfahren nach einem der Ansprüche 1 bis 6, **dadurch gekennzeichnet, dass** die Abschätzung des nachweisbaren minimalen SER anhand der Verteilung des Parameters "Clutter + Ziel" erfolgt, wobei die gemessene Pfa-Kurve, die dann mit dem Wahrscheinlichkeitsgesetz des Ziels gefaltet wird, selbst durch ihr SER parametriert wird, und dass eine digitale Optimierungstechnik umgesetzt wird, um den SER entsprechend der gewünschten Detektionswahrscheinlichkeit zu erhalten.

**Claims**

1. Method for displaying the minimum radar cross-section, RCS, of targets that a radar can detect for a given probability of detection $P_{d,0}$ and a given probability of false alarm Pfa, **characterised in that** said method consists of statistically analysing the data received by the radar, measuring the probability law followed by the received radar data and measuring a threshold of detection $\eta$ using the complementary distribution function for a value of the given probability of false alarm, Pfa, the threshold being then converted into an RCS value, said RCS value being the value minimising the expression $|P_d(\eta,\sigma) - P_{d,0}|$ function of $P_{d,0}$, in which $P_d(\eta, \sigma)$ is the value of the probability of detection based on said threshold $\eta$ and an average RCS $\sigma$ of the target calculated for a zone of the given distance-azimuth space, the value $P_d(\eta, \sigma)$ being obtained by a convolution of the desired probability of false alarm Pfa with the corresponding density of probability $p_X(x, \sigma)$ from the probability law followed by the radar data, the obtained values being then transmitted to a display device that displays according to distance, azimuth, elevation.

2. Method according to claim 1, **characterised in that** the display device of a Doppler-dependent type display also displays according to distance, azimuth and elevation.

3. Method according to any one of the previous claims, **characterised in that** the threshold is adapted to take into account the fluctuations of perturbations, the law of fluctuations of perturbations being directly obtained from data measured by the radar in real time during the measurements.

4. Method according to any one of the previous claims, **characterised in that** the collected radar data are grouped according to elementary zones which divide the distance-azimuth space.

5. Method according to one of claims 3 or 4, **characterised in that** the collected radar data are grouped according to elementary zones which divide distance, azimuth, elevation, Doppler.

6. Method according to one of the previous claims, **characterised in that** the estimate of the minimum detectable RCS is made solely on the basis of the curve of the measured false alarm, without taking into account the reflectivity fluctuations of the target.

7. Method according to any one of the previous claims, **characterised in that** the estimate of the minimum detectable RCS is made on the basis of the curve of false alarm, the threshold of detection being determined for a desired Pfa, and the target fluctuation law, known *a priori,* being then directly inverted to obtain the minimum RCS corresponding to a given probability of detection.

8. Method according to any one of claims 1 to 6, **characterised in that** the estimate of the minimum detectable RCS is made on the basis of the "clutter + target" distribution parameter, the curve of measured Pfa being then convoluted with the target probability law, itself parameterised by its RCS, and that a numerical optimisation technique is implemented to obtain the RCS corresponding to the desired probability of detection.

FIG.1

FIG.2

SER min. détectable, pfa = 10$^{-2}$

FIG.3

SER min. détectable, pfa = 10$^{-3}$

FIG.4

SER min. détectable, pfa = $10^{-4}$

seuils
SER min. cible Pd = 0.5
SER min. cible Pd = 0.9
SER min. cible+clutter Pd = 0.5
SER min. cible+clutter Pd = 0.9

SER min. détectable ($m^2$)

Distance (NM)

FIG.5

**EP 2 668 519 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2729474, S.Watts
- EP 0588688 A1
- US 4970660 A